# EUROPEAN PATENT SPECIFICATION

(11) **EP 1 293 326 B1**
(45) Date of publication and mention of the grant of the patent: **04.04.2007**
(21) Application number: 02020413.7
(22) Date of filing: 10.09.2002
(51) Int. Cl.: B29C 47/20, B29C 47/86, B29C 47/92

(54) **Temperature controlled extrusion die for the extrusion of tubular films**
Temperaturgeregelte Extrusionsdüse für Extrusion von Schlauchfolien
Filière d'extrusion à température régulée pour la fabrication des films tubulaires

(30) Priority: 12.09.2001 IT MI20011902
(43) Date of publication of application: 19.03.2003
(73) Proprietor: ELECTRONIC SYSTEMS S.P.A., 28015 Momo (NO) (IT)
(72) Inventor: Saini, Marco, 28041 Arona (NO) (IT); Traficante, Francesco, 21052 Busto Arsizio (VA) (IT); Masotti, Alexxandro, 21013 Gallarate (VA) (IT); Fregonara, Simons, 28024 Gargallo (IT)
(74) Representative: Premru, Rok

(56) References cited:
- EP-A- 0 390 696
- EP-A- 0 586 205
- DE-A- 2 232 930
- PATENT ABSTRACTS OF JAPAN vol. 1996, no. 06, 28 June 1996 (1996-06-28) & JP 08 034047 A (MATSUSHITA ELECTRIC WORKS LTD), 6 February 1996 (1996-02-06)

## Description

The subject of the present description is a die for the extrusion of a single-layer or multilayer tubular film, in particular of thermoplastic polymeric materials, and a lip adjusting ring for an extrusion die.

A further subject of the present description is a method for adjusting the thickness profile of an extruded tubular film.

In an extrusion die for tubular films - also known as blown films - the material, in the plastic state, comes out, under pressure, from an extrusion slit defined externally by a die body and by lip adjusting ring or annular flange, placed above the die body, and internally by a mandrel or gauge, which is housed inside the die body and the lip adjusting ring.

The die body is provided internally with channels for feeding of the material to be extruded and externally with electrical heaters that maintain the extrusion die at the required working temperature (e.g., approximately 190-210 °C).

Typically, the thickness of the annular slit is between 0.5 and 1.5 mm, whilst the diameter of the annular extrusion slit is usually between 200 and 1000 mm.

To bring the extruded tubular film to the desired thickness, immediately after extrusion, it is drawn in the two directions: longitudinally (M.D.) via the drawing assembly (the ratio between the rate of output of the material and the rate of drawing determines the value of longitudinal stretching); and crosswise (C.D.) via a device known by the term I.B.C. (Internal-Bubble-Cooling system).

When the pressure of the air inside the tubular extrusion is modified, the diameter of the tubular finished product changes, and hence also the size of the transverse stretching or swelling.

By varying the rate of drawing of the film and swelling, it is possible to vary the ratio between the longitudinal stretching and the transverse stretching of the tubular film.

Typically, the ratio of swelling ranges from 1:1.5 to 1:3, whilst the drawing speed varies between 4 and 60 m/min.

The characteristics of the extruded tubular film, in particular the mechanical strength, the ultraviolet shielding, the tearing resistance, and the permeability to gases, depend upon the thickness of the material itself.

For these reasons, it is important that the minimum value of the thickness profile of the extruded tubular film should always be greater than a pre-set minimum threshold.

On the other hand, if the thickness of the tubular film is greater than the required value, there is a useless waste of material.

Moreover, if the thickness profiles of the extruded film is not uniform problems may arises during the use of the film for packaging purposes.

For these reasons, it is also important that the thickness profile of the extruded tubular film should be as uniform as possible; i.e., the variance σ² of the thickness profile should be as small as possible.

Given the above, it is noted that the thickness profile of an extruded tubular film tends to present an irregular pattern caused, in particular, by:
- eccentricity between the die lip adjusting ring and the internal mandrel, which causes a non-uniformity of the annular slit;
- non-uniformity of the temperature of the lip adjusting ring over its entire circumference;
- non-uniform temperature of the cooling air over its entire circumference;
- non-uniform flow rate of the material over its entire circumference;
- presence of draughts in the working environment.

To correct the non-uniformity of the size of the annular slit of the extrusion die, it is necessary to operate manually on special adjustment screws, set circumferentially on the lip adjusting ring, which causes a radial centring displacement thereof with respect to the gauge.

The above solution does not, however, enable correction of all the cases of non-uniformity described above, and in any case it is an open-loop adjustment, which only corrects a systematic error, such as the eccentricity between the lip adjusting ring and the mandrel that determine the output slit of the material.

Consequently, it does not enable correction of those errors, to which the extrusion die is subject during the production process, that cause a non-planarity of the thickness of the material.

A known solution is to carry out a closed-loop adjustment of the thickness profile of the tubular film by varying locally the temperature of the extruded material and hence the local viscosity of the material itself, so as to adjust locally the aptitude of the extruded material to be drawn and hence the variation in thickness obtained in the subsequent step of swelling of the tubular film.

In practice, the greater the local heating, the greater the reduction in thickness of the film.

According to the prior art, the localized adjustment of the temperature of the extruded film is made by means of a set of electrical heaters - housed in holes set circumferentially inside the lip adjusting ring - which can be adjusted selectively.

That is to say, the heating power of each of the heating elements provided around the annular slit is varied in accordance with the degree of error in thickness.

However, the above prior art presents various drawbacks.

In particular, the adjustment of a sector of the lip adjusting ring causes a variation in temperature also in the sectors adjacent to the drawplate itself, so that the local correction of the thickness may lead to errors in the adjacent sectors.

In addition the results achieved are not always satisfactory, especially when it is requested a high selectivity, i.e. when it is necessary to act on a narrow longitudinal sector of the extruded film.

Furthermore, the heat generated for rendering the thickness profile of the film uniform, increases the problems of dissipation of the extrusion die and in particular creates the risk of exceeding the maximum temperature that the extruded material is able to withstand.

Moreover while the temperature may be rapidly increased it can be only slowly decreased, therefore there is also an unsatisfactory level of adjustment speed.

EP-B1- 0 390 696 discloses a tubular film molding die having a plurality of heating elements, individually controlled, distributed circularly in the lip adjusting ring around the annular slit with a cooling hole, embedded between each pair of heating elements, and a temperature measuring means measuring the temperature around the heating elements.

For each cooling hole there is an adjusting valve controlling the amount of cooling air flowing into the cooling hole so as to perform locally a feedback control of the cooling.

It is admitted that the provision of the cooling holes solves the problems of heat dissipation as well as a faster local cooling of the lip adjusting ring.

However it has to be noted that due to the time necessary form the extruded material to join the thickness measuring means and due to the fact that the thickness measuring means moves around the tubular film the situation of the thickness profile can be updated only several minutes after the extrusion (usually after 2-5 minutes).

Hence it is not possible to take completely advantage from the faster cooling obtained by the apparatus disclosed in EP-B1- 0 390 696.

On the other hand the provision of a number of temperature measuring elements embedded in the lip adjusting ring close to the heating elements and the provision of a feedback control with a number of adjusting valves increases the costs and the complexity of the molding apparatus.

Moreover it has to be noted that the apparatus disclosed in EP-B1- 0 390 696 consumes a lot of thermal and cryogenic energy and that the results achieved are not always satisfactory.

A purpose of the present invention is to propose a solution to the problems presented by the known prior art, and in particular to the problems explicitly referred to above.

Another purpose of the present invention is to propose a solution that can be easily implemented also on already existing extrusion die.

The above-mentioned problems are solved by means of an extrusion die for the extrusion of single-layer or multilayer tubular film according to claim 1, by means of a lip adjusting ring according to claim 8 and by means of a method of adjustment of the thickness profile of an extruded tubular film, according to claim 9.

Further advantages may be obtained by providing an extrusion die in accordance with what is specified in claims 2 to 6, which are dependent upon claim 1, and by means of a method of adjustment of the thickness profile of an extruded tubular film in accordance with what is specified in claims 10 and 11, which are dependent upon claim 9.

Some possible embodiments of the extrusion die will now be described, purely by way of illustrative and non-limiting example, with reference to the attached drawings, in which:

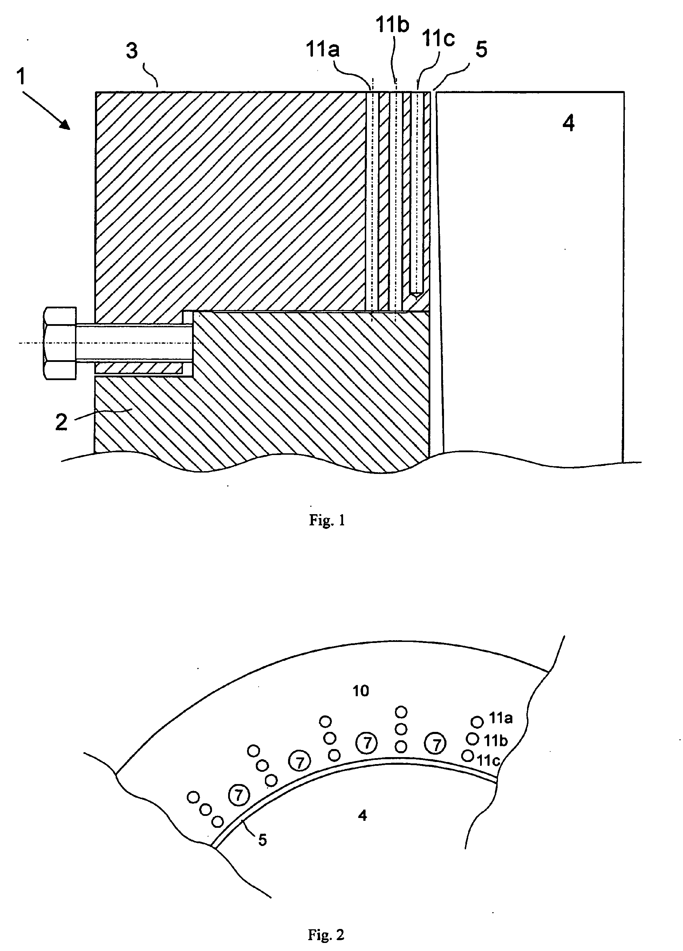

- Figure 1 is a schematic illustration of a detail, in longitudinal cross section, of an extrusion die according to the ensuing claims;
- Figure 2 is a schematic illustration of a detail, viewed from above, of a lip adjusting ring according to the ensuing claims;

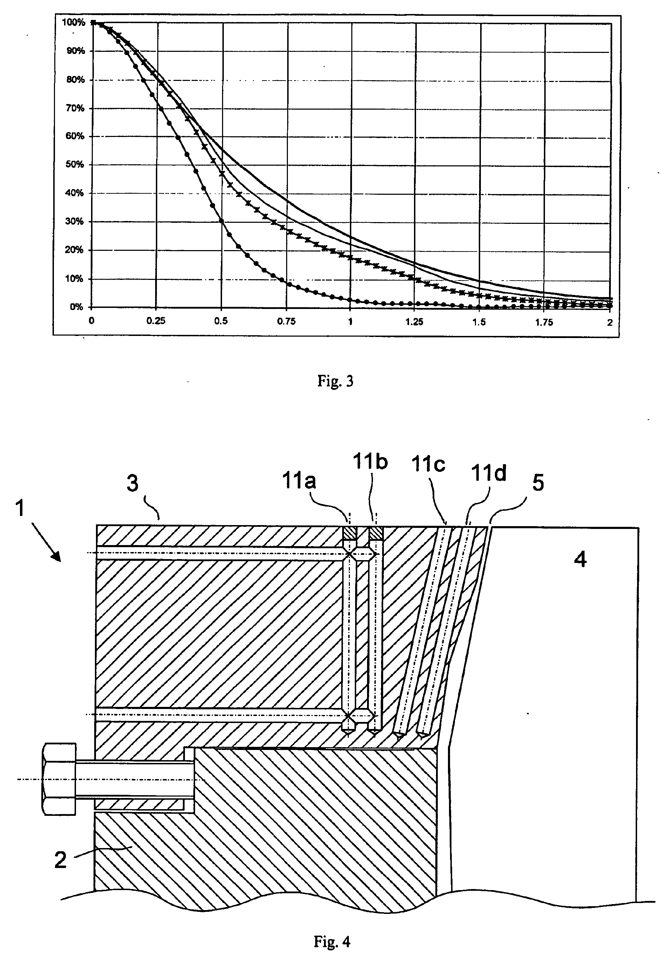

- Figure 3 is a graph illustrating the temperature profile on the metal surface of the lip adjusting ring in contact with the extruded material, with just one resistance turned on, in an extrusion die according to the prior art (thick line) and in three different extrusion dies in accordance with the ensuing claims (with insulation holes but without cooling air - thin line; with insulation holes and a weak flow of cooling air - line with crosses; with insulation holes and strong flow of cooling air - line with dots), number 0, 1 and 2 on the abscissa corresponds to the angular position of the resistance of the radial sectors of the lip adjusting ring;
- Figure 4 is a schematic view, in longitudinal cross section, of another lip adjusting ring according to the ensuing claims.

With reference to the tables of drawings, the number 1 designates, as a whole, an extrusion die for the extrusion of single-layer or multilayer tubular film, comprising a die body 2 a lip adjusting ring 3 and a mandrel 4, housed inside the die body 2 and the lip adjusting ring 3, which define an extrusion opening or slit 5.

Heating (not illustrated), typically electrical resistances, are distributed around the lip adjusting ring 3 to keep the extrusion die 1 at the required working temperature.

Located inside the lip adjusting ring 3 are a plurality of heating elements 7, preferably electrical heaters, distributed circumferentially, which can be actuated selectively for adjusting locally the temperature - and hence the viscosity- of the extruded material.

Each of said heating elements 7 is connected to a feedback control (not shown) able to control the thickness profile of the extruded film.

Alternatively, the extrusion die is without the means of heating around the lip adjusting ring 3, and the heating elements 7 are the only means of heating, which have both the function of maintaining the extrusion die 1 at the working temperature and the function of modifying locally the temperature of the extruded material.

Provided in the system that comprises the extrusion die are, in addition, special means (not shown) designed for stretching the extruded tubular film, swelling the extruded tubular film, and flattening and drawing the tubular film after swelling.

Measuring means (not shown), set downstream of the means for stretching the film, are provided for measuring the thickness profile of the extruded tubular film.

A characteristic of the extrusion die described lies in the fact that the lip adjusting ring is divided in a plurality of radial sectors (10) thermally insulated from the adjacent radial sectors (10, 10) by means of a plurality of holes 11a, 11b, 11c substantially radially aligned.

Each radial sector 10 contains at least one heating element 7 which is not exposed within the air of the adjacent holes 11a, 11b, 11c.

This feature improves the thermal efficiency of heating process.

According to the embodiments illustrated, each radial sector 10 is separated from the contiguous radial sector by three or four radially aligned holes 11a, 11b, 11c, 11d which thermally insulate the contiguous circular sectors 10, confining the heat produced by the individual heaters 7 and hence reducing the thermal disturbance between the contiguous circular sectors 10.

Moreover the thermal insulation between the circular sectors 10 makes it possible to improve the selectivity of the thickness profile adjustment.

In addition, the presence of the holes, by increasing the thermal insulation, enables a pre-set difference in temperature to be achieved between two adjacent circular sectors, with a reduced use of heating energy:

Preferably, the holes 11a, 11b, 11c, 11d have a diameter of approximately 5 mm and a distance between centres of approximately 7 mm.

A person skilled in the art will appreciate the fact that the holes 11, albeit guaranteeing a good thermal insulation, do not weaken the structure of the flange 3 excessively.

In addition, the holes 11 may be made simply; consequently, the solution described in the present Patent may be implemented without particular problems also on already existing extrusion dies.

Alternatively the holes 11 a, 11b, 11c,11d may be replaced by means of longitudinal slot obtained, for instance, by milling.

Preferably the hole 11c or the holes 11c, 11d radially closer to the annular extrusion slit 5 are substantially parallel to the extrusion path of the tubular film as well as to the heating element(s) 7 located in the radial sector 10.

Thanks to this feature is possible to minimize the number of holes 11a, 11b, 11c, 11d necessary for obtaining a good thermal isolation between the adjacent radial sectors 10.

According to one possible embodiment the minimum distance between the wall of the holes defining a circular sector 10 and the wall of the hole in which the heating element 7 is embedded is at least 3 mm.

Preferably the hole 11c or the holes 11c, 11d radially closer to the annular slit 5 are blind holes, i.e are not opened towards the die body 2.

This feature avoids risks of leakage of melted through said holes.

In accordance with a possible embodiment of the invention, the holes 11a, 11b defining the circular sectors 10 are connected to means for supplying coolant, for instance, compressed air, in such a way to cool substantially uniformly the hollow annular flange 3.

This supplementary feature increases the heat dissipation of the extruding die while maintaining a good thermal isolation between the adjacent circular sectors 10.

It is to be noted that adjustment of the thickness profile is still obtained only by modifying the power of the heating elements 7, since the cooling of the annular flange - which is uniform around all the circumference of the lip adjusting ring 3 - is not provided for adjusting the thickness profile, but only for keeping the main temperature of the lip adjusting ring 3 below a preset temperature.

Having particular regard to the teaching of EP-B1- 0 390 696 it will be appreciated that the above mentioned solution significantly reduces the average consumption of cryogenic energy.

Preferably the hole 11c or the holes 11c, 11d closer to the annular slit 5 are not connected to the means for supplying coolant.

This supplementary feature avoid the presence of longitudinal defects on the extruded film surface which happens when the circular profile temperature in the slit 5 varies too quickly, i.e. when the temperature gradient of the extruded material around the slit 5 is too high.

By way of example using an extrusion die having a diameter of 400 mm and having 48 heating elements the thermal power dissipated by the entire lip adjusting ring, according to the flow rate of the air, may range between 300 W and 3000 W, which is sufficient for maintaining the average temperature constant.

The adjustment of the thickness profile of the extruded tubular film produced by the above mentioned extrusion die thus comprises the steps of:
- thermally insulating the hollow flange of the extrusion die 3 into circular sectors 10 by means of a plurality of holes 11a, 11b, 11c, 11d aligned substantially radially along a number N of directions circularly distributed;
- adjusting selectively the temperature of each circular sector 10 of the flange 3, in response to a feedback signal coming from a measuring device, so as to adjust locally the viscosity of the extruded material and therefore the thickness profile;

Preferably, the method of adjustment also envisages the step of carrying out a generalized cooling of the flange 3 of the extrusion die 1, so as to maintain the temperature of the extruded film below a preset value.

More preferably the cooling is not affected in the hole 11c or in the holes 11c, 11d radially closer to the annular slit 5.

## Claims

1. A die (1) for the extrusion of a tubular film, either single-layer or multilayer ones, comprising:
- a die body (2);
- a lip adjusting ring (3);
- a mandrel (4), housed inside the die body (2) and the lip adjusting ring (3), said
- lip adjusting ring (3) and said mandrel (4) defining an annular extrusion slit (5); and
- a plurality of heating elements (7), distributed in a circle inside holes made in the lip adjusting ring (3), which can be actuated selectively for adjusting locally the temperature of extrusion and hence the viscosity of the extruded film, each of said heating elements (7) designed to be adjusted in response to a feedback signal coming from a thickness profile measuring device;
said lip adjusting ring (3) comprising a plurality of radial sectors (10), each of said radial sectors (10) being thermally insulated from the adjacent radial sectors (10, 10) by means of a plurality of holes (11a, 11b, 11c, 11d) substantially radially aligned, each radial sector (10) containing at least one heating element (7), said at least one heating elements (7) of each said radial sector (10) being not exposed within the air of said plurality of holes (11a, 11b, 11c, 11d) defining said radial sector (10).

2. The die for the extrusion of a tubular film according to claim 1, in which the hole (11c) or the holes (11c, 11d) of said plurality of holes (11a, 11b, 11c, 11d) which defines each radial sector (10), radially closest to the annular slit (5) are substantially parallel to the extrusion path as well as to said at least one heating element (7) located in said radial sector (10).

3. The die for the extrusion of tubular films according to Claim 1 or 2, in which for any radial sector (10) the distance between the walls of the of said plurality of holes (11a, 11b, 11c; 11d) and the holes in which the heating elements (7) are embedded is at least 3 mm.

4. The die for the extrusion of tubular films according to claim 1 or 2 or 3 in which the hole (11c) or the holes (11c; 11d) radially closer to the annular slit (5) are blind holes (11c; 11c, 11d).

5. A combination of a die (1) for the extrusion of tubular films according to claim 1 or 2 or 3 with means for supplying coolant to said holes (11 a, 11b) defining said N radial sectors (10)

6. A combination of a die (1) for the extrusion of tubular films with means for supplying coolant according to claim 5, modified in that the hole or the holes (11c; 11c, 11d) radially closer to the annular slit (5) are not connected to the means for supplying coolant.

7. A lip adjusting ring (3) for a die for the extrusion a tubular film defined in claim 1, said lip adjusting ring (3) comprising a plurality of radial sectors (10), each of said radial sectors (10) being thermally insulated from the adjacent radial sectors (10, 10) by means of a plurality of holes (11a, 11b, 11c, 11d) substantially radially aligned, each radial sector (10) containing at least one heating element (7), said at least one heating elements (7) of each said radial sector (10) being not exposed within the air of said plurality of holes (11a, 11b, 11c, 11d) defining said radial sector (10).

8. A lip adjusting ring (3), according to claim 7, in which the hole (11c) or the holes (11c, 11d) of said plurality of holes (11a, 11b, 11c; 11d,) which defines each radial sector (10), radially closest to the annular slit (5) are substantially parallel to the extrusion path as well as to said at least one heating element (7) located in said radial sector (10).

9. A lip adjusting ring (3), according to Claim 7 or 8, in which for any radial sector (10) the distance between the walls of the of said plurality of holes (11a, 11b, 11c ; 11d) and the holes in which the heating elements (7) are embedded is at least 3 mm.

10. A lip adjusting ring (3), according to claim 7 or 8 or 9, in which the hole (11c) or the holes (11c; 11d) radially closer to the annular slit (5) are blind holes (11c; 11c, 11d).

11. Method for adjusting the thickness profile of a tubular film being extruded with the die according to claim 1, comprising selectively adjusting the power of each heating element (7) in response to a feedback signal coming from a thickness profile measuring device.

12. The method according to Claim 11, further comprising the step of carrying out a substantially uniform cooling of the flange (3) of the extrusion head between, by supplying coolant to said plurality of holes (11a, 11b) so as to maintain the temperature of the extruding die below a preset value.

13. The method according to Claim 12, modified in that said cooling is not performed in the hole (11c) or the holes (11c, 11d) radially closer to the annular slit (5).

## Patentansprüche

1. Düse (1) für die Extrusion einer ein- oder vielschichtigen Schlauchfolie, umfassend
- einen Düsenkörper (2),
- einen Düseneinstellring (3),
- einen innerhalb des Düsenkörpers (2) und des Düseneinstellrings (3) angeordneten Dorn (4), welcher
- Düseneinstellring (3) und welcher Dorn (4) einen ringförmigen Extrusionsschlitz (5) begrenzen, und
- eine Mehrzahl von Heizelementen (7), die auf einem Kreis verteilt in Lochungen angeordnet sind, die in den Düseneinstellring (3) eingebracht sind, welche Heizelemente (7) selektiv betätigbar sind, um die Extrusionstemperatur und damit die Viskosität der extrudierten Folie lokal zu steuern, wobei jedes Heizelement (7) derart ausgestaltet ist, dass es in Abhängigkeit von einem von einer Dickenprofilmessvorrichtung kommenden Rückmeldesignals eingestellt werden kann,
welcher Düseneinstellring (3) eine Mehrzahl von radialen Sektoren (10) aufweist, von denen jeder mittels einer Mehrzahl von im Wesentlichen radial angeordneten Löchern (11a, 11b, 11c, 11d) thermisch zu den angrenzenden radialen Sektoren (10,10) isoliert ist, wobei jeder radiale Sektor (10) mindestens ein Heizelement (7) aufweist, und wobei das mindestens eine Heizelement (7) jedes radialen Sektors (10) nicht dem Luftzug der Mehrzahl von Löchern (11a, 11b, 11c, 11d) ausgesetzt ist, die den radialen Sektor (10) begrenzen.

2. Düse für die Extrusion einer Schlauchfolie nach Anspruch 1, bei der das dem Extrusionsschlitz (5) radial am nächsten liegende Loch (11c) oder die dem Extrusionsschlitz (5) radial am nächsten liegende Löcher (11c, 11d) der Mehrzahl von Löchern (11a, 11b, 11c, 11d), welche die einzelnen radialen Sektoren (10) begrenzen, im Wesentlichen parallel zu dem zum Extrusionspfad sowie zu dem mindestens einen im radialen Sektoren (10) vorgesehenen Heizelement (7) angeordnet ist.

3. Düse für die Extrusion von Schlauchfolien nach Anspruch 1 oder 2, bei der für jeden radialen Sektor (10) der Abstand zwischen den Wänden der Mehrzahl von Löchern (11a, 11b, 11c, 11d) und den Lochungen, in denen die Heizelemente (7) eingelassen sind, mindestens 3mm beträgt.

4. Düse für die Extrusion von Schlauchfolien nach Anspruch 1, 2 oder 3, bei der das radial näher am Extrusionsschlitz (5) befindliche Loch (11c) oder die radial näher am Extrusionsschlitz (5) befindlichen Löcher (11c, 11d) Blindlöcher (11c; 11c, 11d) sind.

5. Kombination einer Düse (1) für die Extrusion von Schlauchfolien nach Anspruch 1, 2 oder 3 mit Mitteln zum Versorgen der die N radialen Sektoren begrenzenden Löcher (11a, 11b) mit Kühlmittel.

6. Kombination einer Düse (1) für die Extrusion von Schlauchfolien mit Mitteln zum Versorgen mit Kühlmittel nach Anspruch 5, modifiziert in der Weise, dass das radial näher am Extrusionsschlitz (5) angeordnete Loch (11c) oder die radial näher am Extrusionsschlitz (5) angeordneten Löcher (11c, 11d) nicht mit den Mitteln zum Versorgen mit Kühlmittel verbunden sind.

7. Düseneinstellring (3) für eine Extrusionsdüse zur Extrusion einer Schlauchfolie gemäß Anspruch 1, welcher Düseneinstellring (3) eine Mehrzahl radialer Sektoren (10) aufweist, wobei jeder radiale Sektor (10) mittels einer Mehrzahl von im Wesentlichen radial angeordneten Löchern (11a, 11b, 11c, 11d) thermisch gegenüber den angrenzenden Sektoren (10, 10) isoliert ist, wobei jeder radiale Sektor (10) mindestens ein Heizelement (7) enthält, welches mindestens eine Heizelement (7) jedes radialen Sektors (10) nicht dem Luftzug der Mehrzahl von Löchern (11a, 11b, 11c, 11d) ausgesetzt ist, die den radialen Sektor (10) begrenzen.

8. Düseneinstellring (3) nach Anspruch 7, wobei das radial am nächsten zum Extrusionsschlitz (5) angeordnete Loch (11c) oder die radial am nächsten zum Extrusionsschlitz (5) angeordneten Löcher (11c, 11d) der Mehrzahl von Löchern (11a, 11b, 11c, 11d), welche die einzelnen radialen Sektor (10) begrenzen, sowohl im Wesentlichen parallel zum Extrusionspfad als auch im Wesentlichen parallel zu dem mindestens einen, in dem betreffenden radialen Sektor (10) vorgesehenen Heizelement (7) angeordnet ist.

9. Düseneinstellring (3) nach Anspruch 7 oder 8, bei dem für jeden radialen Sektor (10) der Abstand zwischen den Wänden der Mehrzahl von Löchern (11a, 11b, 11c, 11d) und den Lochungen, in denen die Heizelemente (7) eingelassen sind, mindestens 3mm beträgt.

10. Düseneinstellring (3) nach Anspruch 7, 8 oder 9, bei dem das radial näher am Extrusionsschlitz (5) befindliche Loch (11c) oder die radial näher am Extrusionsschlitz (5) befindlichen Löcher (11c, 11d) Blindlöcher (11c; 11c, 11d) sind.

11. Verfahren zur Regelung des Dickenprofils einer mittels einer Extrusionsdüse nach Anspruch 1 extrudierten Schlauchfolie, umfassend eine selektive Regelung der Leistung jedes Heizelements (7) in Abhängigkeit von einem Rückmeldesignal, das von einer Dickenprofilmessvorrichtung kommt.

12. Verfahren nach Anspruch 11, welches außerdem den Schritt zur Ausführung einer im Wesentlichen gleichmäßigen Kühlung eines Flanschs (3) des Extrusionskopfs dazwischen umfasst, durch das Zuführen von Kühlmittel zu der Mehrzahl von Löchern (11a, 11b) derart, dass die Temperatur der Extrusionsdüse unterhalb eines vorliegenden Wertes bleibt.

13. Verfahren nach Anspruch 12, modifiziert in der Weise, dass die Kühlung nicht in dem radial näher am Extrusionsschlitz (5) befindlichen Loch (11c) oder den radial näher am Extrusionsschlitz (5) befindlichen Löchern (11c, 11d erfolgt.

## Revendications

1. Filière (1) pour l'extrusion d'un film tubulaire en simple couche ou en couches multiples comprenant :
- un corps (2) de filière
- un rebord torique de réglage (3)
- un mandrill (4) disposé à l'intérieur de la filière (2) et le rebord torique de réglage (3)
- ledit rebord torique de réglage (3) et ledit mandrill (4) formant une fente annulaire d'extrusion (5) ;
et
- une pluralité d'éléments chauffants (7) disposés en cercle à l'intérieur des perçages pratiqués dans le rebord torique de réglage (3), qui peuvent être actionnés d'une manière sélective pour en régler localement la température d'extrusion et ainsi la viscosité du film extrudé, chacun desdits éléments chauffants (7) étant prévus pour être commandé à partir d'un signal de retour en provenance d'un appareil de mesure de l'épaisseur de profile ;
ledit rebord torique de réglage (3) comprenant plusieurs segments radiaux (10), chacun desdits segments radiaux (10) étant isolé thermiquement par rapport aux segments voisins (10.10) au moyen d'une pluralité de perçages (11a, 11 b, 11 c, 11 d) alignés sensiblement radialement, chaque segment radial (10) comprenant au moins un élément chauffant (7), ledit élément chauffant (7) au minimum de chaque segment radial (10) étant isolé de l'air desdits perçages multiples (11 a, 11 b, 11 c, 11 d) constituant de la sorte lesdits segments radiaux (10).

2. Filière pour l'extrusion d'un film tubulaire selon la revendication 1, dans laquelle le perçage (11 c) ou les perçages (11 c, 11 d) de ladite pluralité de perçages (11 a, 11 b, 11 c, 11 d) formant chacun des segments radiaux (10) juxtaposés radialement au plus proche des fentes annulaires (5), sont sensiblement parallèles au cheminement d'extrusion aussi bien qu'à au moins un desdits éléments chauffants (7) placé sur ledit segment radial (10).

3. Filière pour l'extrusion d'un film tubulaire selon la revendication 1 ou 2, dans laquelle pour n'importe quel segment radial (10) l'écart entre les parois de ladite pluralité de perçages (11 a, 11 b, 11 c, 11 d) et les perçages dans lesquels se trouvent montés les éléments chauffants (7) est de au moins 3 mm.

4. Filière pour l'extrusion d'un film tubulaire selon la revendication 1, 2 ou 3, dans laquelle le perçage (11c) ou les perçages (11c, 11d) radialement proches de la fente annulaire (5) sont des trous borgnes (11c, 11c, 11d).

5. Combinaison d'une filière (1) pour l'extrusion d'un film tubulaire selon la revendication 1, 2 ou 3, avec des moyens d'approvisionnement en fluide de refroidissement desdits perçages (11a, 11b) définissant lesdits N segments radiaux (10).

6. Combinaison d'une filière (1) pour l'extrusion d'un film tubulaire avec des moyens d'approvisionnement en fluide de refroidissement selon la revendication 5, modifiée en ce que le perçage ou les perçages (11 c, 11 c, 11 d) radialement proches de la fente annulaire (5) ne sont pas reliés aux moyens d'approvisionnement en fluide de refroidissement.

7. Rebord de réglage (3) pour une filière pour l'extrusion d'un film tubulaire définie dans la revendication 1, ledit rebord torique de réglage (3) comprenant une pluralité de segments radiaux (10), chacun desdits segments radiaux (10) étant isolé thermiquement par rapport aux segments voisins (10, 10) au moyen d'une pluralité de perçages (11a, 11 b, 11 c, 11 d) alignés sensiblement radialement, chaque segment radial (10) comprenant au moins un élément chauffant (7), ledit élément chauffant (7) au minimum de chaque segment radial (10) étant isolé de l'air desdits perçages multiples (11a, 11 b, 11c, 11d) constituant de la sorte lesdits segments radiaux (10).

8. Rebord torique de réglage (3) selon la revendication 7, dans lequel le perçage (11c) ou les perçages (11c, 11d) de ladite pluralité de perçages (11a, 11b, 11c, 11d) formant chacun des segments radiaux (10), juxtaposés radialement au plus proche des fentes (5), sont sensiblement parallèles au cheminement d'extrusion aussi bien qu'à au moins un desdits éléments chauffants (7) placé sur ledit segment radial (10).

9. Rebord torique de réglage (3) selon la revendication 7 ou 8, dans lequel pour n'importe quel segment radial (10) l'écart entre les parois de ladite pluralité de perçages (11 a, 11 b, 11 c, 11 d) et les perçages dans lesquels se trouvent montés les éléments chauffants (7) est de au moins 3 mm.

10. Rebord torique de réglage (3) selon la revendication 7 ou 8 ou 9, dans lequel le perçage (11c) ou les perçages (11c, 11d) radialement proches de la fente annulaire (5) sont des trous borgnes (11 c, 11 c, 11 d).

11. Procédé pour régler l'épaisseur de profil d'un film tubulaire qui est extrudé avec la filière selon la revendication 1, comprenant un réglage sélectif de la puissance de chaque élément chauffant (7) en réponse à un signal de réactions venant d'un appareil de mesure de profil d'épaisseur.

12. Procédé selon la revendication 11, comprenant en outre une étape de sortie d'un refroidissement substantiellement uniforme du rebord (3) de la tête d'extrusion entre, par apport de fluide de refroidissement dans ladite pluralité de trous (11 a, 11 b) afin de maintenir la température de la filière d'extrusion au-dessous d'une valeur définie à l'avance.

13. Procédé selon la revendication 12, modifiée en ce que ledit refroidissement n'est pas exécuté dans le perçage (11c) ou les perçages (11c, 11d) radialement proche de la fente annulaire (5).
